# EUROPÄISCHE PATENTANMELDUNG

(11) **EP 0 698 457 A2**
(43) Veröffentlichungstag der Anmeldung: **28.02.1996**
(21) Anmeldenummer: 95112361.1
(22) Anmeldetag: 05.08.1995
(51) Int. Cl.: B27C 5/06, B27G 21/00, B23Q 3/00

(54) **Holzbearbeitungsmaschine**

(30) Priorität: 19.08.1994 DE 4429570
(71) Anmelder: Josef Scheppach Maschinenfabrik GmbH & Co., D-89335 Ichenhausen (DE)
(72) Erfinder: Scheppach, Fritz, D-89335 Ichenhausen (DE)
(74) Vertreter: Munk, Ludwig, Dipl.-Ing.

(57) **Zusammenfassung**

Bei einer Holzbearbeitungsmaschine mit wenigstens einer Einrichtung zum Andrücken eines Werkstücks (2) an Tischandrückeinrichtung (4), mit einem an einem ggenflächennormal verstellbaren Halter (6) federnd abgestützten Druckschuh (13), lassen sich dadurch ein hoher Sicherheitsstandard und Bedienungskomfort erreichen, daß der Druckschuh (13) einen von seiner Rückseite abstehenden, symmetrisch zu seiner Mitte angeordneten Aufbau (14) aufweist, daß der Halter (6) ein dem Druckschuh (13) zugeordnetes Anschlußteil (15) trägt und daß der Aufbau (14) und das Anschlußteil (15) einander mit Abstand übergreifen, der durch jeweils eine vordere und hintere Mehrfachanordnung paralleler Blattfedern (16) überbrückt ist.

## Beschreibung

Die Erfindung betrifft eine Holzbearbeitungsmaschine mit wenigstens einer Einrichtung zum Andrücken eines Werkstücks an wenigstens eine Gegenfläche, vorzugsweise mit wenigstens einer Tischandrückeinrichtung, mit einem an einem gegenflächennormal verstellbaren Halter federnd abgestützen Druckschuh.

Bei den bekannten Anordnungen dieser Art ist der Druckschuh als Holzklotz ausgebildet, der über zwei einander gegenüberliegende Federarme mit dem stangenförmigen Halter verbunden ist. Der Druckschuh wird so eingestellt, daß der Abstand zwischen seiner Andrückfläche und der gegenüberliegenden Gegenfläche bei entspannter Federanordnung kleiner als das entsprechende Maß des zu bearbeitenden Werkstücks ist. Wenn das Werkstück unter den Druckschuh eingeschoben wird, wird dieser zunächst einseitig angehoben. Die Folge dieser Kippbewegung ist, daß sich der der Vorschubkraft entgegenwirkende Widerstand zunächst erhöht. Der Abbau dieser Erhöhung kann ruckartig erfolgen. Es ergibt sich daher auch ein ruckartiger Vorschub, was zu Unfällen führen kann. Zudem kann sich die Erhöhung des der Vorschubkraft entgegenwirkenden Widerstands auch ermüdend auf die Bedienungsperson auswirken.

Hiervon ausgehend ist es daher die Aufgabe der vorliegenden Erfindung, eine Anordnung eingangs erwähnter Art mit einfachen und kostengünstigen Mitteln so zu verbessern, daß ein hoher Sicherheitsstandard und Arbeitskomfort erreicht werden.

Diese Aufgabe wird erfindungsgemäß dadurch gelöst, daß der Druckschuh einen von seiner Rückseite abstehenden, symmetrisch zu seiner Mitte angeordneten Aufbau aufweist, daß der Halter ein dem Druckschuh zugeordnetes Anschlußteil trägt und daß der Aufbau und das Anschlußteil einander mit Abstand übergreifen, der durch jeweils mindestens zwei in Vorschubrichtung vordere und hintere Blattfedern überbrückt ist.

Diese Maßnahmen stellen sicher, daß der Druckschuh beim Einschieben des Werkstücks zwangsläufig eine zur zugeordneten Gegenfläche parallele Hubbewegung macht. Eine Kippbewegung des Druckschuhs ist nicht zu befürchten. Es ergeben sich dementsprechend in vorteilhafter Weise gleichmäßige Andrück- und dementsprechend Vorschubkräfte.

Vorteilhafte Ausgestaltungen und zweckmäßige Fortbildungen der übergeordneten Maßnahmen sind in den Unteransprüchen angegeben. Dadurch, daß die den Abstand zwischen Aufbau und Anschlußteil überbrückenden Blattfedern gegenflächenparallel angeordnet sind, ergibt sich eine besonders einfache Bauweise und hohe Zuverlässigkeit.

Eine weitere zweckmäßige Maßnahme kann darin bestehen, daß die Blattfedern als durch Schlitze gebildete Stege eines den Druckschuh und das Anschlußteil enthaltenden, einteiligen Klotzes ausgebildet sind. Diese Maßnahmen ermöglichen eine einfache und kostengünstige Herstellung als Kunststoff-Spritzgußformling. Gleichzeitig ergibt sich hierbei ein zuverlässiger Zugriffsschutz, da der Klotz lediglich schlitzförmige Ausnehmung aufweist.

Vorteilhaft kann zur Bildung des Klotzes ein Gleitkunststoff wie Polyamid etc.. Verwendung finden. Hierdurch lassen sich die erforderlichen Vorschubkräfte reduzieren.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung entnehmbar.

Nachstehend wird ein bevorzugtes Ausführungsbeispiel der Erfindung anhand der Zeichnung näher erläutert. Hierbei zeigen:
- Figur 1: eine in Vorschubrichtung gesehene Ansicht einer erfindungsgemäßen Holzfräsmaschine und
- Figur 2: eine Vorderansicht der Tischandrückeinrichtung der Anordnung gemäß Figur 1.

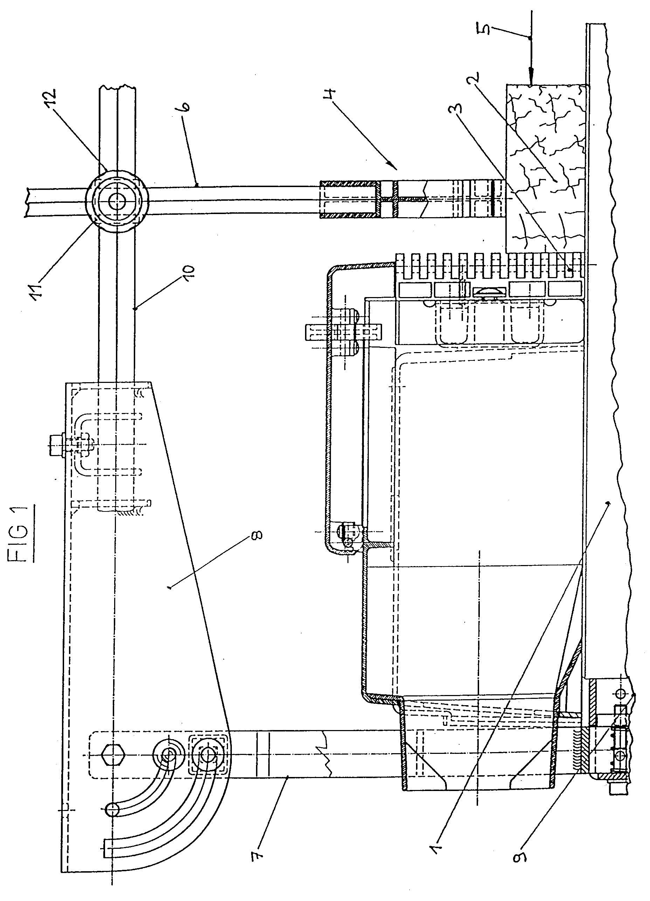

Die der Zeichnung zugrunde liegende Holzfräsmaschine enthält einen auf einem nicht dargestellten Maschinengestell aufgenommenen Tisch 1, der von einem auf einer angetriebenen Welle aufgenommenen, ebenfalls nicht näher dargestellten Fräskopf überragt ist, an dem ein zu bearbeitendes Werkstück 2 vorbeigeschoben wird. Das Werkstück 2 liegt dabei einerseits auf dem Tisch 1 auf und andererseits an einem rechtwinklig auf den Tisch 1 aufgesetzten Längsanschlag 3 an. Das Werkstück 2 wird durch eine Tischandrückeinrichtung 4 an den Tisch 1 und durch eine in Figur 1 durch einen Pfeil angedeutete Längsanschlagandrückeinrichtung 5 an den Längsanschlag 3 angedrückt.

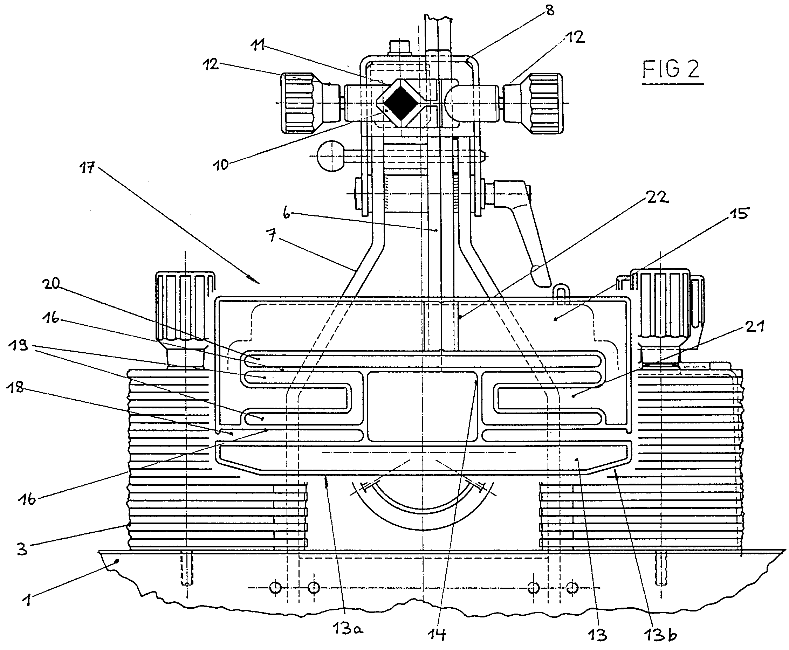

Die beiden Andrückeinrichtung sind jeweils an einem nach oben abstehenden, durch einen Profilstab gebildeten Halter 6 befestigt, wie in den Figuren 1 und 2 für die Tischandrückeinrichtung 4 gezeigt ist. Zur Aufnahme der Halter 6 der beiden Andrückeinrichtungen ist ein den Fräskopf übergreifender Galgen vorgesehen. Dieser enthält einen tischnormal angeordneten Ständer 7 und einen von diesem quer zur Vorschubrichtung abstehenden, hier um eine tischpralelle Achse schwenkbaren Ausleger 8. Zur Aufnahme des Ständers 7 ist der Tisch 1 mit einer im Bereich seiner von der Bearbeitungsseite abgewandten Längsflanke angeordneten Anbaukonsole 9 versehen, die mit Einsteckausnehmungen versehen ist, in die am Ständer 7 befestigte Zapfen einsteckbar sind. Zur Fixierung können Spannschrauben vorgesehen sein.

Der Ausleger 8 trägt eine durch einen Profilstab gebildete, über das Werkstück 2 auskragende Führungsschiene 10. Auf dieser sind, wie am besten aus Figur 2 erkennbar ist, den Andrückeinrichtungen zugeordnete Lagerteile 11 verschiebbar gelagert, die eine vom jeweils zugeordneten Halter 6 durchgriffene Führungsausnehmung aufweisen. Zum Fixieren der Lagerteile 11 gegenüber der Führungsschiene 10 und der Halter 6 gegenüber dem jeweils zugeordneten Lagerteil 11 sind Klemmeinrichtungen 12 vorgesehen. Die Verwendung von Profilstäben, zur Bildung der Führungsschiene 10 und der Halter 6 ergibt eine automatische Verdrehsicherung. Durch Verschieben der Lagerteile 11 und der Halter 6 läßt sich die jeweils zugeordnete Andrückeinrichtung in der gewünschten Weise positionieren.

Die Tischandrückeinrichtung enthält, wie am besten aus Figur 2 erkennbar ist, ein hier stempelförmiges Unterteil mit einem plattenförmigen Druckschuh 13 mit tischparaleller Andrückfläche 13a. Am in Vorschubrichtung vorderen und hinteren Ende sind keilförmige Einlaufphasen 13b vorgesehen. Der plattenförmige Druckschuh 13 ist mit einem von seiner von der Andrückfläche 13a abgewandten Oberseite nach oben abstehenden, kopfförmigen Aufbau 14 versehen. Der Aufbau 14 ist bezüglich der Länge des Druckschuhs 13 mittig angeordnet und erstreckt sich über die ganze Druckschuhbreite. Der kopfförmige Aufbau 14 greift in ein ihn mit Abstand übergreifenden, portalförmigen Bügel 15 ein. Der ein Oberteil der Tischandrückeinrichtung bildende Bügel 15 ist am Halter 6 befestigt und fungiert somit auch als Halter-Anschlußteil. Die den kopfförmigen Aufbau 14 des Druckschuhs 13 in Vorschubrichtung vorn und hinten flankierenden Schenkel des Bügels 15 sind mit der jeweils zugewandten Seitenflanke des kopfförmigen Aufbaus 14 durch eine Mehrfachanordnung paralleler Blattfedern 16 verbunden. Im dargestellten Beispiel sind hierzu im entlastenden Zustand zur Oberfläche des Tisches 1 und dementsprechend auch zur Andrückfläche 13a des Druckschuhs 13 parallele Blattfedern 16 vorgesehen.

Anstelle eines kopfförmigen Aufbaus 14 und eines am Halter 6 befestigten Bügels 15 könnte auch in kinematischer Umkehr hierzu ein bügelförmig ausgebildeter Druckschuh Verwendung finden, in den ein am Halter 6 befestigter Stempel eingreift. In jedem Falle sind die beiden einander mit Abstand übergreifenden Teile durch symmetrisch zur Mitte angeordnete Blattfeder-Mehrfachanordnungen miteinander verbunden.

Im dargestellten Beispiel sind, wie die Figur 2 weiter erkennen läßt, der Druckschuh 13 mit Aufbau 14 sowie der Bügel 15 und die diese Teile miteinander verbindenden Blattfedern 16 an einen einteiligen Klotz 17 angeformt. Die Blattfedern 16 sind dabei als durch entsprechende Ausnehmungen des Klotzes 17 begrenzte Stege ausgebildet.

Klotz 17 ist hier mit die Blattfedern 16 flankierenden Schlitzen 18,19,20 versehen. Die unteren Schlitze 18 zwischen dem platttenförmigen Druckschuh 13 und den unteren Blattfedern 16 können jeweils am vom Aufbau 14 abgewandten Ende, das heißt im Bereich der in Vorschubrichtung vorderen und hinteren Flanken des Klotzes 17 offen sein, wodurch der Druckschuh 13 eine hohe Beweglichkeit erreicht. Eine derartige Ausführung liegt der Figur 2 zugrunde. Die Schlitze 19,20 zwischen den beiden Blattfedern 16 und zwischen der oberen Blattfeder 16 und dem Joch des Bügels 15 sind geschlossen. Im Falle der oben erwähnten kinematischen Umkehr wären die offenen Schlitze oben. Im dargestellten Beispiel besitzen die übereinander angeordneten Blattfedern 16 einen größeren Abstand. Zur Vermeidung von Druchgriffslöchern sind die Schenkel des Bügels 15 daher mit zwischen die Blattfedern 16 eingreifenden Zungen 21 versehen, was die Sicherheit erhöht.

Der Klotz 17 kann aus Kunststoff bestehen. Zweckmäßig findet ein Gleitkunststoff, wie Polyamid, Verwendung. Hierdurch wird die dem Vorschub des Werkstücks 2 entgegenwirkende Reibung reduziert. Ein derartiger Klotz 17 läßt sich einfach als Spritzgußformling herstellen, was eine kostengünstige Produktion ermöglicht.

Die Längsanschlag-Andrückeinrichtung 5 kann ebenfalls mit einem Klotz 17 der aus Figur 2 entnehmbaren Art versehen sein. Dieser wäre lediglich liegend anzuordnen, wobei der Halter 6 parallel zur Andrückfläche 13a verlaufen müßte. Hierzu kann einfach eine im Bereich einer Seitenflanke des Jochs des Bügels 15 ausmündende, andrückflächparalelle Anschlußbüchse für den Halter 6 vorgesehen sein. Im dargestellten Beispiel ist eine andrückflächenormale, im Bereich des Jochrückens ausmündende Anschlußbüchse 22 vorgesehen. Diese ist gegenüber der Mitte des Klotzes 17 soweit versetzt, daß dieser bezüglich des Auslegers 8 mittig gehalten wird.

Die Einstellung der Andrückeinrichtungen 4,5 erfolgt so, daß der Abstand der Andrückfläche 13a von der jeweiligen Gegenfläche im entspannten Zustand der Blattfedern 16 etwas kleiner als das betreffende Maß des Werkstücks 2 ist. Diese Differenz wird beim Einschieben des Werkstücks 2 unter den Druckschuh 13 durch die Blattfedern 16 ausgeglichen. Hierbei wird der Druckschuh 13 unter entsprechender Auslenkung der Blattfedern 16 verschoben. Aufgrund der Parallelität der Blattfedern 16 ergibt sich dabei eine zur Andrückfläche 13a und dementsprechend auch zu der dieser zugeordneten Gegenfläche rechtwinklige Verschiebebewegung des Druckschuhs 13, d.h. dieser bleibt zu sich selbst parallel.

## Patentansprüche

1. Holzbearbeitungsmaschine mit wenigstens einer Einrichtung zum Andrücken eines Werkstücks (2) an wenigstens eine Gegenfläche, vorzugsweise mit wenigstens einer Tischandrückeinrichtung (4), mit einem an einem gegenflächennormal verstellbaren Halter (6) federnd abgestützten Druckschuh (13), **dadurch gekennzeichnet, daß** der Druckschuh (13) einen von seiner Rückseite abstehenden, symmetrisch zu seiner Mitte angeordneten Aufbau (14) aufweist, daß der Halter (6) ein dem Druckschuh (13) zugeordnetes Anschlußteil (15) trägt und daß der Aufbau (14) und das Anschlußteil (15) einander mit Abstand übergreifen, der durch jeweils eine in Vorschubrichtung vordere und hintere Mehrfachanordnung paralleler Blattfedern (16) überbrückt ist.

2. Holzbearbeitungsmaschine nach Anspruch 1, **dadurch gekennzeichnet, daß** jeweils zwei parallele Blattfedern (16) vorgesehen sind.

3. Holzbearbeitungsmaschine nach einem der vorhergehenden Ansprüche, **dadurch gekennzeichnet, daß** der Aufbau (14) als mittig angeordneter Kopf und das Anschlußteil (15) als portalförmiger Bügel ausgebildet sind.

4. Holzbearbeitungsmaschine nach einem der vorhergehenden Ansprüche, **dadurch gekennzeichnet, daß** die Blattfedern (16) gegenflächenparallel angeordnet sind.

5. Holzbearbeitungsmaschine nach einem der vorhergehenden Ansprüche, **dadurch gekennzeichnet, daß** die Blattfedern (16) als durch Schlitze (18,19,20) gebildete Stege eines den Druckschuh (13) und das Anschlußteil (15) enthaltenden, einteiligen Klotzes (17) ausgebildet sind.

6. Holzbearbeitungsmaschine nach Anspruch 5, **dadurch gekennzeichnet, daß** der Klotz (17) als aus Kunststoff bestehender Spritzgußformling ausgebildet ist.

7. Holzbearbeitungsmaschine nach Anspruch 6, **dadurch gekennzeichnet, daß** der Klotz (17) aus Gleitkunststoff besteht,

8. Holzbearbeitungsmaschine nach einem der vorhergehenden Ansprüche, **dadurch gekennzeichnet, daß** der Halter (6) als Profilstab ausgebildet ist, der eine zugeordnete Führungsausnehmung eines Lagerteils (11) durchgreift, das seinerseits verschiebbar auf einer mit Abstand oberhalb des Tisches (1) angeordneten, quer zur Vorschubrichtung verlaufenden Führungsschiene (10) aufgenommen ist.

9. Holzbearbeitungsmaschine nach Anspruch 8, **dadurch gekennzeichnet, daß** die Führungsschiene (10) schwenkbar auf einem am Tisch (1) anbringbaren Ständer (7) aufgenommen ist.

10. Holzbearbeitungsmaschine nach Anspruch 8 oder 9, **dadurch gekennzeichnet, daß** im Bereich der von der Bedienungsseite abgewandten Längsflanke des Tisches (1) eine Anbaukonsole (9) vorgesehen ist, auf der ein die Führungsschiene (10) tragender Ständer (7) mittels einer Steckverbindung aufnehmbar ist.
